# EUROPEAN PATENT APPLICATION

(11) **EP 0 593 201 A1**
(43) Date of publication of application: **20.04.1994**
(21) Application number: 93307940.2
(22) Date of filing: 06.10.1993
(51) Int. Cl.: E06B 9/386, E06B 9/32, E04F 10/10

(54) **A shading apparatus for glazed facade or roof elements**

(30) Priority: 06.10.1992 DE 4233617; 02.02.1993 DE 4302883
(71) Applicant: COLT INTERNATIONAL HOLDINGS A.G., CH-6340 Walterswil/Baar (CH)
(72) Inventor: Mikesch, Walter, 6300 Zug (CH)
(74) Representative: Greenwood, John David

(57) **Abstract**

Apparatus for providing adjustable degrees of illumination through a glazed structure includes a number of pivotable, horizontal louvres (2). The louvres can be pivoted to a first position when direct sunlight can be reflected off a reflective portion (5) of the louvres (2) inwardly and upwardly through the glazed structure to strike a ceiling. This obtains useful illumination to the room whilst providing shade from direct sunlight. The louvres can also be provided with solar cells (14) to provide electrical energy when the sun is lower, for example.

## Description

This invention relates to an apparatus for providing adjustable degrees of sunlight illumination through a glazed structure. It is of particular, but not exclusive, application to providing shade to the interiors of industrial structures having glazed facades or roof elements.

Known apparatus for providing variable degrees of shade include a number of spaced-apart, strip-like shutter members mounted on a common support and each pivotable on it about a respective horizontal axis. An example of such an arrangement is described in DE-3500768 C2.

When it is desired to shade the glazed structure from direct sunlight, for example to prevent strong sunlight shining directly on the occupants of a building, the strip members, or louvres, are positioned to absorb the light or reflect it away from the facade. The position of the louvres necessary to provide the required degree of shade will vary according to the prevailing weather conditions and the time of day and year.

A disadvantage of such prior art apparatus is that the light energy prevented from shining directly through the facade is not available for illumination or other purposes.

According to the present invention an apparatus according to the preamble of claim 1 is characterised in that at least a portion of each shutter member is reflective, and in that the shutter members are pivotable to a first position in which the reflective portion of the shutter member is positioned to reflect direct sunlight inwardly and upwardly through the glazed structure and a second position in which at least a portion of the direct sunlight is prevented from passing through to the facade.

When operating with the shutters in the first position shade is provided to any occupants against direct sunlight but the previously wasted light energy is thrown inwardly and upwardly to illuminate the ceiling of a room behind the facade which provides diffused, acceptable, illumination to the occupants.

The reflective portions may be partially reflective, in the range 80% to 90% reflective preferably, so that some illumination can pass to the facade when the shutters are set to provide shade. The reflective portions can be conveniently formed by coating glass shutters with a reflective coating.

The shutters may be provided with a light transparent portion which is adjacent the glass facade when the shutters are in the first position. Although direct sunlight may be prevented from reaching a given light transparent portion due to the imposition of the reflective portion of another, vertically displaced shutter, diffused light can still strike it and will be able to pass to the facade to provide diffused illumination to supplement that derived from the inwardly and upwardly reflected direct sunlight.

The reflective and transparent portions of the shutters may be each planar but non-coplanar with respect to each other.

In one arrangement, the shutters are such that in the second position there is no horizontal overlap of the shutters. This provides partial shading when the sun is low in the sky whilst providing occupants within a building with a view of the outside of the building between the shutters.

In this second position the reflective portion of the shutter may be positioned to reflect direct sunlight away from the facade or may be positioned to present the other side of the reflective portion to the sun to absorb the light, by a solar cell for example.

The support for a group of shutters can be fixed to a facade and extend generally outward from it. This arrangement is particularly advantageous as it allows the shutters to adopt a position which can throw direct sunlight deep into a room behind a facade when the sun is high in the sky with no overlap in the vertical direction, thereby maximising the light thrown into a room for a given reflective area of shutter.

The support may be hinged on the facade and means for adjusting its position relative to the facade provided to place the shutters in the best operating configurations for the prevailing conditions.

This arrangement is particularly advantageous when the shutters have solar energy conversion means, for example solar cells, on the opposite side to the reflecting region. The shutter can then be positioned to reflect direct light through the facade or to absorb light by the solar energy conversion means.

In the reflection position, shade is provided whilst occupants of a building have an outward view past the substantially horizontally disposed shutters.

The apparatus may include an operating unit for moving the shutters and/or the support which unit includes a means for determining the actual position of the sun at any given moment so that the pivoted position of the shutters can be varied as a function of the actual position of the sun which is thus ascertained. The optimum positioning command for adjusting the pivot angle to adapt to the angle of incidence of the sunlight can be passed via an electronic motor unit to positioning motors which pivot the shutters, for instance via an operating linkage and operating levers, towards the sun continuously, i.e. according to the time of the year and the time of day. When the sky is completely overcast, or at times when the relevant glazed structural member is not being struck by direct sunlight, the glass sheets can be moved into a pivoted-open horizontal position in which they allow maximum possible visibility outwards from inside the rooms without any manual intervention of any kind.

As noted above, apparatus according to the invention can be utilised for the purpose of having the shutter also generate current by means of integrated solar cell modules. In accordance with a particularly preferred embodiment of the invention, these solar cell modules are constructed as partially transparent photovoltaic modules which are integrated into the shutters. Modern photovoltaic modules can also be variously coloured and are capable of bringing about the desired shading properties of partially transparent members in a particularly aesthetic manner. In addition to the above described advantages in terms of shading properties and light permeability, it is thus possible to provide solar power production to existing industrial buildings whilst providing shading for the occupants.

Embodiments of the invention will now be described, by way of example only, with reference to the accompanying drawings, in which:
Figure 1a is a diagrammatic end view of a first embodiment of an apparatus according to the invention in summertime operation with high direct sunlight;
Figure 1b is a view similar to Figure 1a, during winter operation with low direct sunlight;

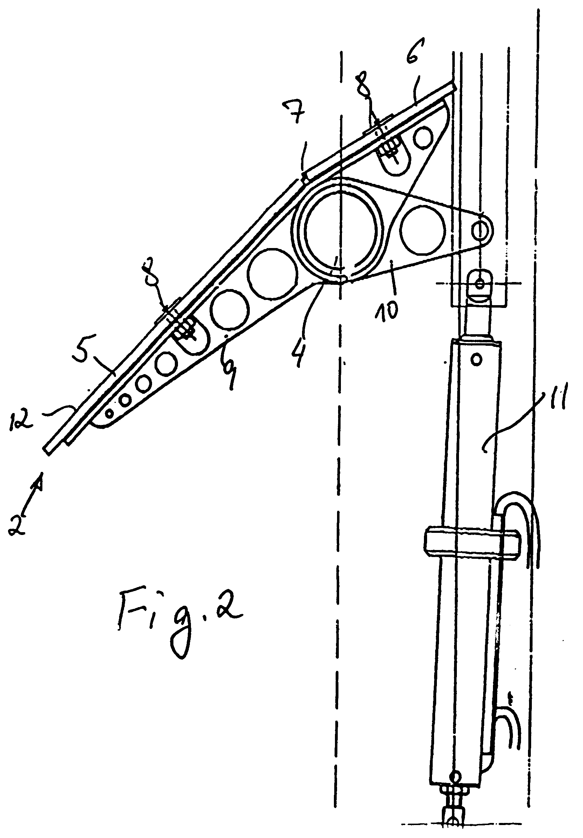

Figure 2 is a cross-section through a glass plate according to the embodiments in Figures 1a and 1b;
Figure 3 is a perspective plan view of an embodiment of glass plate of the apparatus according to the invention;

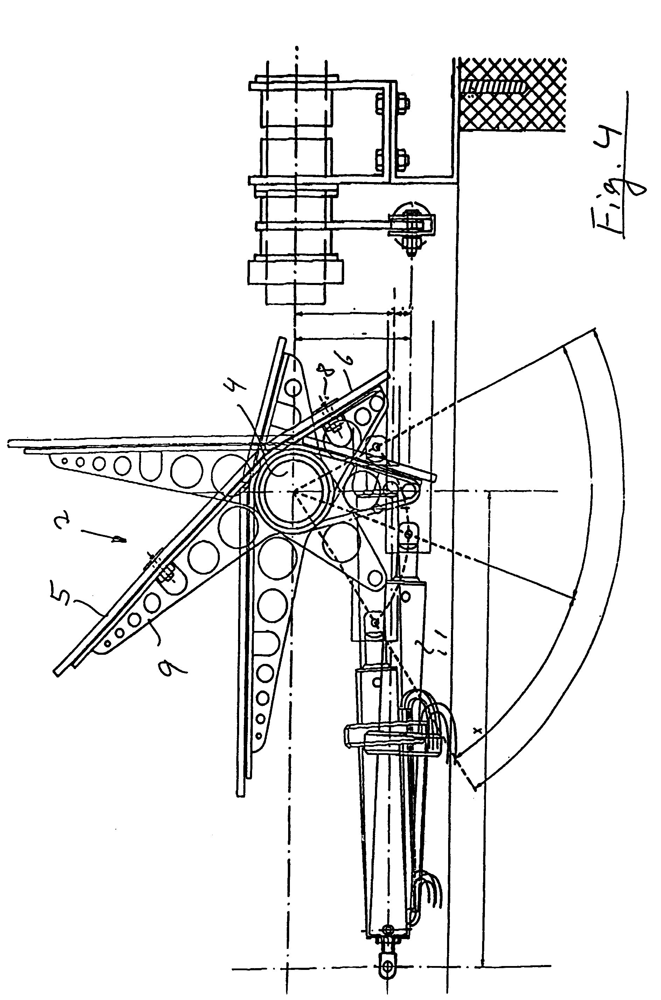

Figure 4 is a diagrammatic cross-section through the embodiment shown in Figure 3 showing the positioning cylinder for pivoting the glass sheets into various pivoted positions;
Figure 5 is a diagrammatic plan view of a further embodiment of an apparatus according to the invention with glass sheets provided with solar cell modules;
Figure 6 is a cross-sectional view of the embodiment shown in Figure 5;
Figures 7a and 7b are views similar to that in Figures 1a and 1b illustrating a further example of embodiment according to the invention, with glass sheets provided with solar cell modules; and
Figure 8 is a diagrammatic view of an alternative embodiment with glass sheets partially mirrored on the back and which are fixed on outwardly pivotable supports and with solar cells on the front.

The apparatus for shading glazed areas, windows or other light-permeable bodies in facades, roofs, rain shelters, pavilions, light roads, ridge turrets or the like, and generally designated 1 in the drawings has in the embodiments illustrated a plurality of spaced apart superposed parallel strip-like glass sheets 2 which are disposed on the outside of a glass facade or fixed glazed area 3 and are pivotable about a horizontal axis via a torsion tube 4. In the examples of embodiment illustrated, the glass sheets 2 are constructed in two parts and each has an outer portion 5 and an inner portion 6 consisting of respective separate glass strips in an oppositely inclined arrangement and which are connected to one another at their mutually facing end edges via a silicone seal 7. The glass strips 5 and 6 of the glass sheets 2 are supported by screwed connections 8 on supporting members 9 which are to be pushed onto a torsion tube 4. Also needing to be pushed onto the torsion tube 4 is an operating lever 10 which has to be actuated with the positioning cylinder 11 of an operating unit not shown in greater detail but which is adapted to be motor-driven.

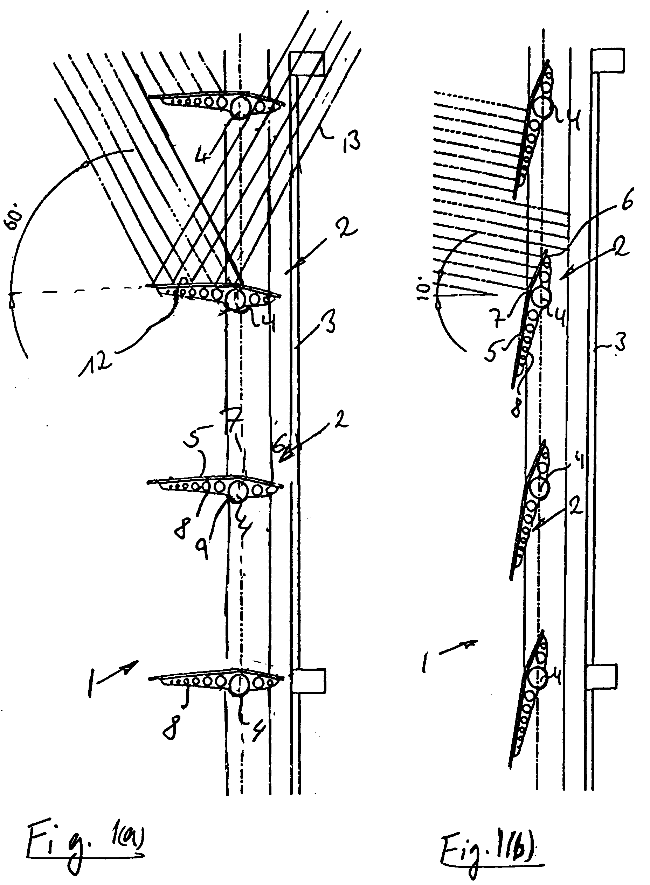

In the first example of embodiment, (see Figures 1a and 1b) the outer portion 5 of the glass plate 2 is provided with a reflective coating 12. By virtue of this reflective coating 12, this glass plate 2 attains radiation transmission levels within a preferred range of 10% to 20% (reflectively of 80% to 90%) In this case the transmissivity is approximately 15%. For an incident sunshine angle (Figure 1a) of 60°, e.g. in summer, the sunlight, as indicated by the shaded lines 13 in Figure 1a, can be so reflected that while the interior is being shaded from direct sunlight and yet can admit diffuse natural light, the direct sunlight is directed at the reflecting ceiling of the room so that the intensity of the lighting is markedly enhanced in the room. The individual glass sheets are disposed at such a distance from one another that in the open position shown (Figure 1a) and at the illustrated angle of the sun's position of 60°, the outer end edge allows maximum irradiation of the outer portion 5, i.e. as far as the silicone seal 7 between the two glass strips. With a lower elevation of sun the relatively angled shutter portions 5 and 6 direct the sunlight to two areas of the ceiling so increasing the area of the ceiling illuminated, in those embodiments of the present invention in which both portions 5 and 6 are fully or partially reflective.

In this embodiment, when in the pivoted-in, closed, a free space remains between adjacent glass sheets 2 as shown in Figure 1b. With a low sun position, (e.g. at 10°) as shown by the shaded area in Figure 1b, the glass sheets 2 are pivoted inwardly, i.e. into their more vertical position in relation to the glass facade 3. Sunlight is able to enter the interior of the room through the free spaces between the glass sheets, although the parts of the room interior which are close to the floor are not subject to direct sunlight. Nevertheless, even during such operation, the part transparent glass sheets ensure that diffused light is able to enter although the rays of the sun cannot enter directly. In both cases, however, it is possible to see through to the outside.

The shutters could operate in an equivalent way by rotating to position 180° to that of Figure 1b to expose a solar cell to absorb the sunlight rather than reflect it away from the facade.

The operating unit (which is not shown in great detail) provides for automatic follow-up control of the glass sheets 2 in accordance with the sun's position or the incident angle of the sun's rays. For this purpose, a means of determining the momentary position of the sun or its actual position is provided. This passes the acquired actual signal to a control unit which actuates the electric positioning motor accordingly. This unit can be programmed appropriately for each facade, so that according to the position of the building, optimum adaptation of the shutters to the sun can be achieved.

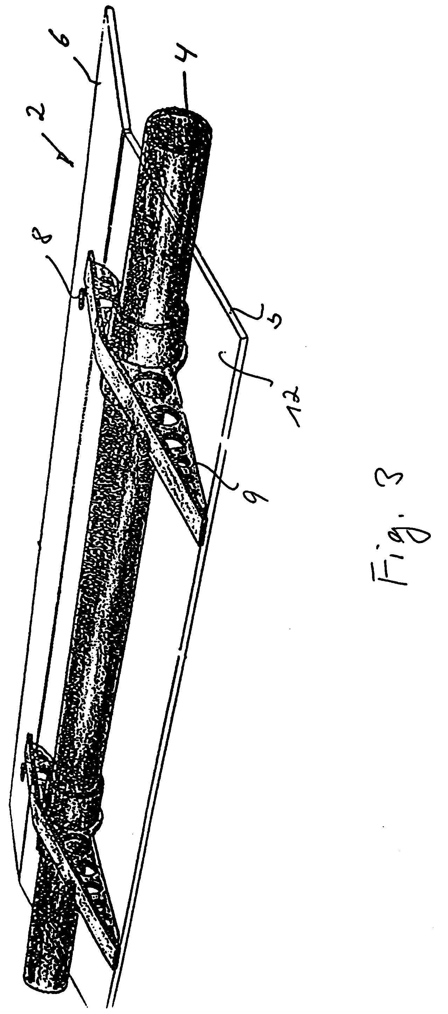

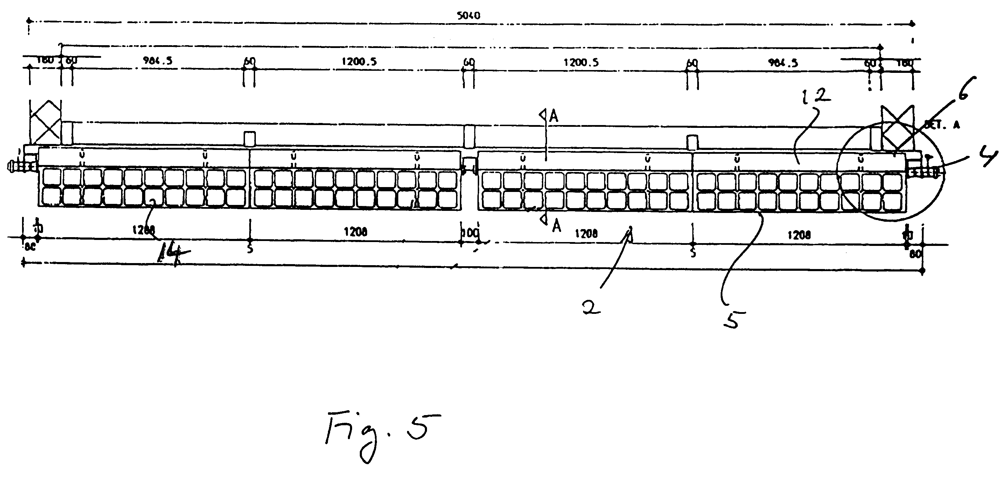

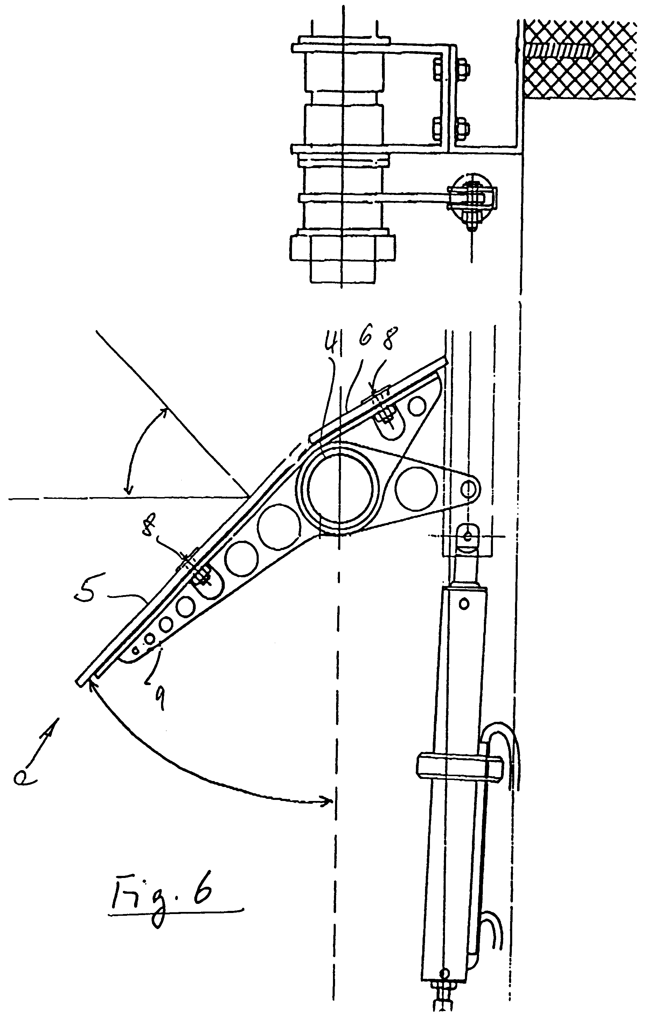

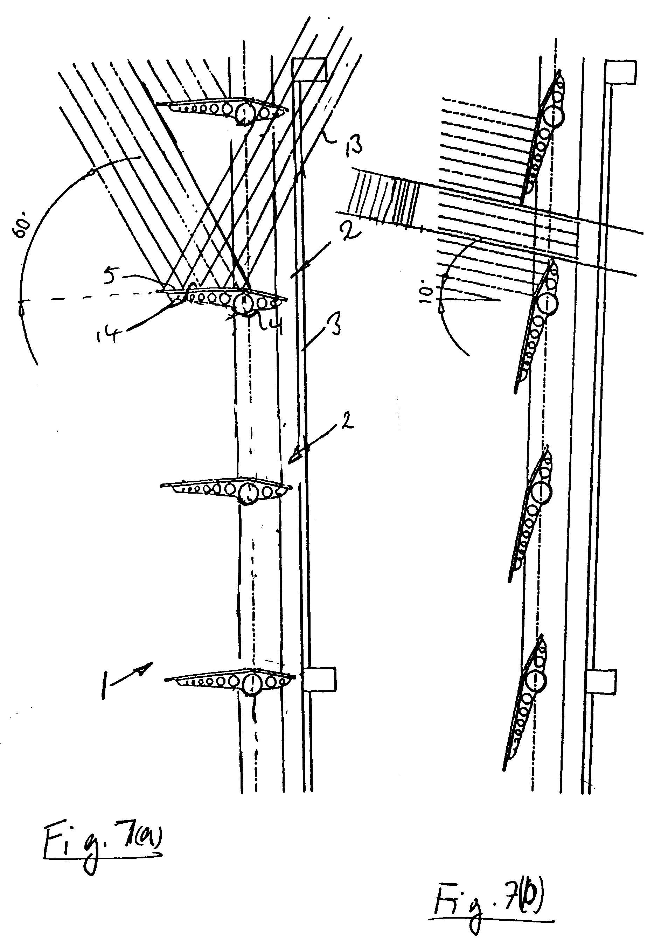

The glass sheets are framelessly supported on the torsion tube (Figure 3) so that even from the outside they present a pleasant appearance. This also provides for an extremely wide range of architectural freedom. In a particularly preferred embodiment, which is shown in Figures 5 to 7b, the outer area 5 of each glass plate 2 is fitted with solar cell modules in the form of photovoltaic modules 14. In order to be able to pass on the solar energy acquired, the torsion tube 2 is used as a cable guide duct. Preferably, the inner portion 6 is provided with a reflective coating or reflective glass in order to obviate the possibility of partial shading of the strip-like shutters. In areas where there are screwed joints, the photovoltaic cells are omitted. According to the siting and orientation of the facade, so the optimum positioning range of the glass sheets 2 is passed via the electronic motor unit, i.e. the unit for recognising the sun's position, to the positioning motors which via the operating linkage and the operating lever, pivot the torsion tubes and consequently the photovoltaic cells continuously at right-angles to the sun. If the shade angle is greater than the designed maximum angle of sheet setting, then the glass sheets 2 are pivoted continuously in the opposite direction, so that no partial shading of a photovoltaic element can occur (Figure 6). At times when the relevant structural member is not being struck by direct sunlight or when the sky is completely overcast, then the glass sheets 2 are again pivoted into a horizontal position in which they afford maximum visibility outwards from the interior of the room. By reason of the gap between the glass sheets (Figures 7a and 7b), the maximum possible sheet attitude without partial shading of any photovoltaic sheet part has to be determined. When the sun's position is low and the sheets are at a certain distance from one another, the sun is able to shine directly on the facade and thus contribute to the passive generation of solar power.

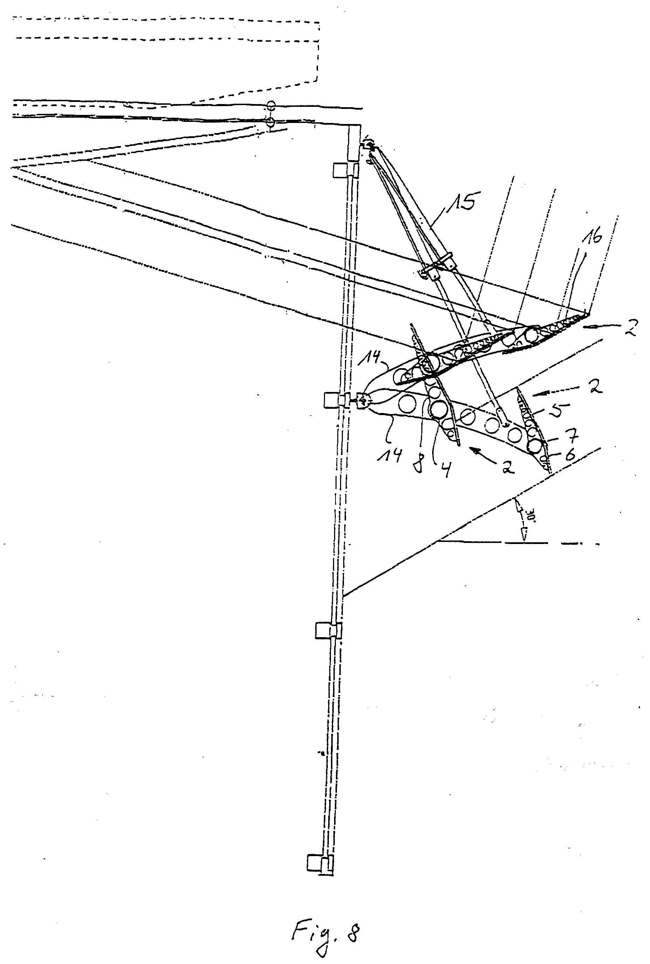

Figure 8 shows a further alternative embodiment. Here, the sheets 2 are fixed on pivotable supports and can be rotated or pivoted through at least 180°. The supports 17 have to be pivoted by cylinder units 15, on the one hand into the shading and photovoltaic setting shown at the bottom in Figure 8 and on the other into the light-reflecting position shown at the top in Figure 8 where the glass sheets 2 are pivoted through 180°. In this case, the backs of the glass sheets are provided with a partial mirroring designated by reference numeral 16 so that, as illustrated by the diagrammatically shown rays of light, in this light-reflecting position the zenithal light can be deflected via the room ceiling into the depths of the room in the building.

## Claims

1. Apparatus for providing adjustable degrees of sunlight illumination through a glazed structure including a plurality of spaced-apart, strip-like shutter members (2) pivotally mounted on a common support and each pivotable about a respective horizontal axis, the axes being parallel, and characterised in that at least a portion of each shutter member (2) is reflective, and in that the shutter members (2) are pivotable to a first position in which the reflective portion (5) of the shutter member (2) is positioned to reflect direct sunlight inwardly and upwardly through the glazed structure and a second position in which at least a portion of the direct sunlight is prevented from passing through to the glazed structure (3).

2. Apparatus as claimed in claim 1 in which the reflective portions (5) of the shutter members (2) are partially reflective.

3. Apparatus as claimed in claim 2 in which the reflective portions (5) of the shutter members (2) have a reflectivity of between 80% to 90%.

4. Apparatus as claimed in any preceding claim in which the shutter members (2) include glass sheets (5) having a reflective coating to form the reflective portion.

5. Apparatus as claimed in any preceding claim in which the shutter members (2) have a light transparent portion (6) adjacent the glazed facade 3) when the shutter members (2) are in the first position.

6. Apparatus as claimed in claim 5 in which the reflective portion (5) and transparent portion (6) of each shutter member (2) comprise distinct planar members, the planar members being non-coplanar.

7. Apparatus as claimed in any preceding claim in which in the second position there is no horizontal overlap of the shutter members (2).

8. Apparatus as claimed in any preceding claim in which the shutter members (2) in the second position present the reflective portion (5) of the shutter member (2) so as to reflect direct sunlight away from the glazed structure (3).

9. Apparatus as claimed in any one of claims 1 to 7 in which there is a solar energy conversion means (14) on the other side of the shutter members (2) to the reflective portions (5) and the shutter members (2) in the second position the solar energy conversion means (14) so as to be able to absorb direct sunlight.

10. Apparatus as claimed in any preceding claim in which the support (17) is fixed to the glazed structure (3) at one end and extends generally outward from the glazed structure (3).

11. Apparatus as claimed in claim 10 in which the support (17) is hinged to the glazed structure (3) and there is included means for adjusting the position of the support (17) relative to the glazed structure (3).

12. Apparatus as claimed in any preceding claim in which the shutter members (2) are pivotable through 180°.

13. Apparatus as claimed in either one of claims 11 and 12 in which, when the shutter members (2) are in the first position, the support (17) can be adjusted to provide that there is no overlap of the shutter members (2) on that support (17) in the vertical direction.

14. An apparatus as claimed in any preceding claim including an operating unit for moving the shutter members (2) and/or the support (17) which unit includes a means for determining the actual position of the sun at any given moment and in that the pivotal position of the shutter members (2) can be varied as a function of the actual position of the sun which is thus ascertained.
